(19) Europäisches Patentamt / European Patent Office / Office européen des brevets

(11) **EP 1 854 689 B1**

(12) **FASCICULE DE BREVET EUROPEEN**

(45) Date de publication et mention
de la délivrance du brevet:
**10.02.2010 Bulletin 2010/06**

(51) Int Cl.:
**B60W 50/06** *(2006.01)* **B60W 40/12** *(2006.01)*
**B60T 8/172** *(2006.01)*

(21) Numéro de dépôt: **07107146.8**

(22) Date de dépôt: **27.04.2007**

(54) **Procédé de réglage d'un système de contrôle dynamique de trajectoire pour véhicule automobile, procédé de sélection des caractéristiques pneumatiques et procédé de reglage de la suspension**

Verfahren zur dynamischen Regelung der Fahrzeugbewegung, Verfahren zum Erfassen von Parametern und Verfahren zur Regelung der Aufhängung

Method for dynamic control of vehicle trajectory, method for selecting vehicle parameters and method for controlling vehicle suspension

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.05.2006 FR 0604316**

(43) Date de publication de la demande:
**14.11.2007 Bulletin 2007/46**

(73) Titulaire: **ROBERT BOSCH GMBH**
**70442 Stuttgart (DE)**

(72) Inventeurs:
• **Bouchard, Christophe**
**95100, ARGENTEUIL (FR)**
• **Sautereau, Richard**
**75019 PARIS (FR)**

(74) Mandataire: **Hurwic, Aleksander Wiktor**
**Bosch Systemes de Freinage,**
**Service Brevets,**
**126, rue de Stalingrad**
**93700 Drancy (FR)**

(56) Documents cités:
WO-A-02/058976    DE-A1- 10 022 355
FR-A- 2 858 951    US-A- 5 842 143

**EP 1 854 689 B1**

## Description

L'invention concerne un procédé de réglage d'un système de contrôle dynamique de trajectoire pour véhicule automobile.

WO 02/058976 décrit une méthode de régulation de stabilité directionnelle alors que FR 2 858 951 décrit un procédé et dispositif de coordination d'un système de régulation de la dynamique de roulage et d'un système différentiel.

Un système de contrôle dynamique de trajectoire ESP (Electronic Stablity Program en terminologie anglo-saxonne) est un système qui permet d'éviter et/ou de corriger les instabilités d'un véhicule. Ce système est fortement lié aux systèmes de commande des roues du véhicule et notamment au système de freinage. Le système ESP est un système global qui gère le comportement général du véhicule et qui assiste le conducteur même dans des situations critiques. Il est capable d'intervenir sur le système d'antiblocage des roues (ABS) (Antilock Braking System) ainsi que sur le système d'antipatinage ASR.

C'est ainsi qu'il permet de fournir une assistance au conducteur ou de compléter ses commandes dans différentes situations telles que:

- le braquage des roues dans des conditions extrêmes,
- la stabilité directionnelle du véhicule dans des plages limites d'utilisation,
- l'utilisation des conditions d'adhérence des pneumatiques sur le sol.

Pour pouvoir influer sur le comportement du véhicule et pour pouvoir élaborer des commandes permettant au véhicule de réaliser la trajectoire requise par le conducteur, le système de contrôle dynamique de trajectoire doit recevoir un grand nombre d'informations concernant le comportement du véhicule et celui des différentes roues pour pouvoir corréler ces différents comportements et apporter les corrections nécessaires à l'aide du système d'antiblocage des roues, du système d'antipatinage ainsi que du système de commande du couple moteur.

Une des façons d'agir sur le comportement du véhicule est d'exercer un freinage sur une ou plusieurs roues.

Cependant, il convient que le système ESP n'intervienne que dans les cas absolument nécessaires où le conducteur ne pourra pas redresser la situation dans laquelle se trouve le véhicule sans agir sur les freins. Il faut donc que le seuil d'intervention de l'ESP soit défini de façon adaptée et à un type de conducteur standard.

On s'aperçoit que la marge de régulation d'un système ESP par rapport aux déclenchements intempestifs est difficile à connaître. Par ailleurs, la mise au point d'un système ESP nécessite de nombreux essais de roulage pour valider les seuils de déclenchement des systèmes ESP.

L'invention fournit un procédé permettant de résoudre ces difficultés.

Selon une forme de réalisation préférée de l'invention, ce procédé comporte les étapes suivantes:

- étape a: équipement d'un véhicule avec un système ESP possédant des valeurs de seuils nominales (Sv) de fonctionnement du système de contrôle dynamique de trajectoire ESP pour différentes vitesses,
- étape b: acquisition en temps réel sur ledit véhicule en situation de roulage, à différents instants, des angles de lacet de consigne,
- étape c: acquisition en temps réel en situation de roulage, aux mêmes instants, des angles de lacet mesurés du véhicule,
- étape d: mesure du seuil de déclenchement (St) de l'ESP à ces différents instants,
- étape e: établissement de la courbe des valeurs de consommations en fonction du temps, ladite courbe étant représentative des différences des angles de lacet mesurés et de consigne rapportées aux valeurs de seuil de déclenchement mesurées,
- étape f: modification des valeurs de seuils nominales d'un pourcentage qui est proportionnel aux valeurs de consommation.

Selon l'invention, on peut prévoir que ce procédé est un procédé de sélection des caractéristiques pneumatiques d'un véhicule.

Selon l'invention, ce procédé est également avantageusement un procédé de réglage de la suspension d'un véhicule.

Il est également prévu que ce procédé est un procédé de réglage dynamique et de mise au point du système de contrôle dynamique de trajectoire (ESP) d'un véhicule.

Les différents objets et caractéristiques de l'invention apparaîtront plus clairement dans la description et dans les figures annexées qui représentent:

- la figure 1, d'un véhicule équipé d'un système de contrôle dynamique de trajectoire,
- la figure 2, un organigramme d'un système de contrôle dynamique de trajectoire d'un système de contrôle dynamique de trajectoire auquel s'applique le procédé de l'invention,
- la figure 3, des courbes illustrant le procédé de l'invention.

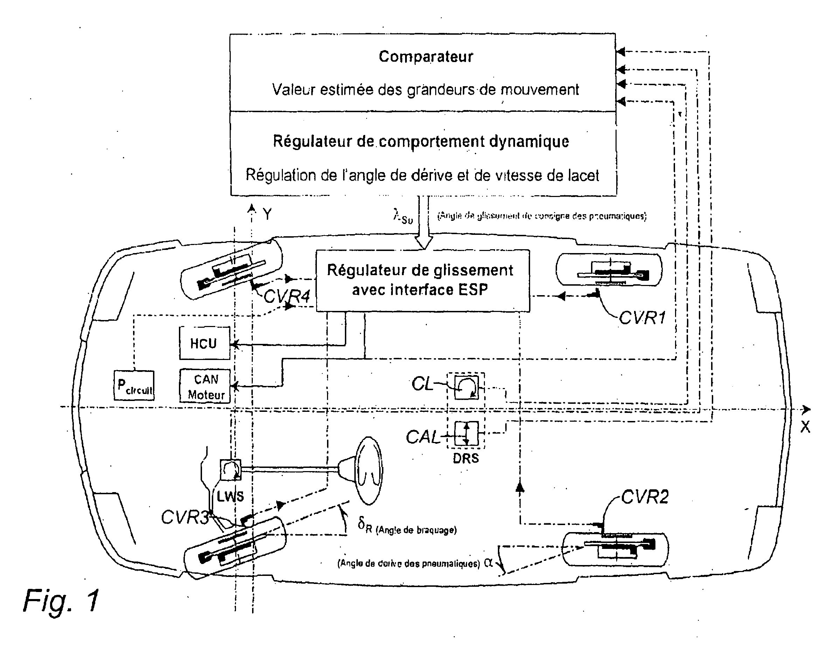

La figure 1 représente de façon schématique un véhicule équipé de différents capteurs permettant d'avoir des informations sur le comportement du véhicule.

On trouve ainsi:

- les capteurs de vitesse de roues (CVR1 à CVR4),
- un capteur d'accélération latérale CAL,

- un capteur de lacet CL,
- un capteur de rotation de l'arbre de direction LWS,
- etc.

Les différentes informations mesurées par ces capteurs sont transmises à un comparateur qui calcule les différents efforts qui s'exercent sur le véhicule.

Un système de contrôle dynamique de trajectoire effectue des traitements en vue d'élaborer des ordres qui sont transmis aux différents organes du véhicule tels que principalement le calculateur CAN de commande du moteur ou l'unité de gestion hydraulique (HCU).

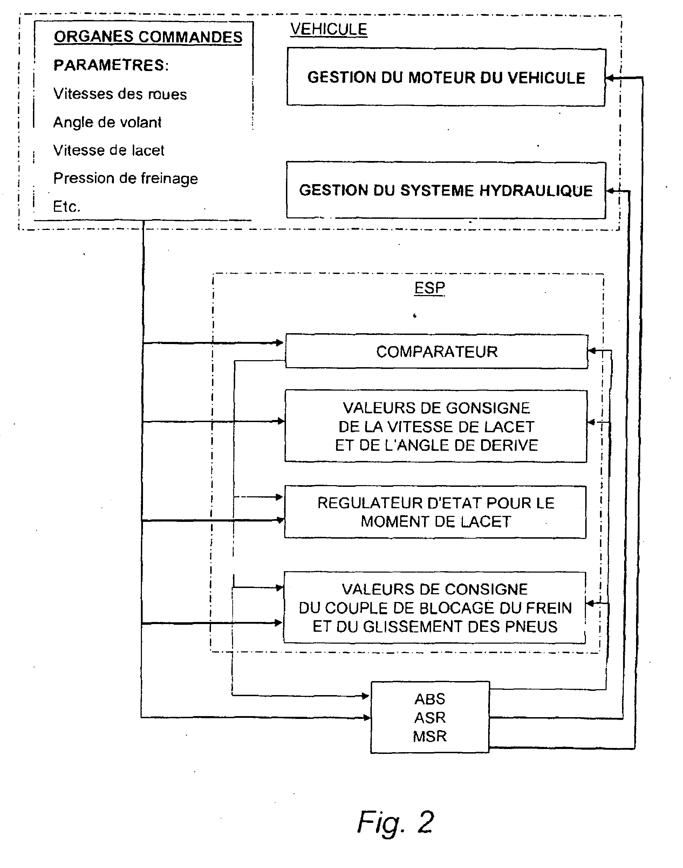

La figure 2 représente un système de contrôle dynamique de trajectoire ESP.

Dans la partie supérieure on trouve un bloc représentant symboliquement un véhicule avec:

- son système de gestion du moteur du véhicule élaborant des commandes du moteur,
- son système de gestion du système hydraulique et notamment du système de freinage,
- les différents organes commandés liés à la rotation et au freinage des roues du véhicule. A ces différents organes sont associés des appareils de mesure fournissant différentes informations qui serviront de paramètres dans les traitements réalisés par le système ESP. On trouve donc dans ce bloc toutes les informations possibles représentant les ordres donnés au véhicule et son comportement détecté par différents capteurs. Il s'agit, par exemple, des paramètres suivants:

- angle de volant
- vitesse de lacet (qui est la vitesse de rotation du véhicule autour de son axe vertical,

Dans la partie inférieure de la figure 2 on trouve les systèmes d'antiblocage des roues ABS, d'antipatinage ASR et de régulation du couple d'inertie du moteur MSR. Ces systèmes reçoivent les paramètres concernant le comportement du véhicule et des roues (vitesse de rotation) et fournissent des commandes appropriées au système de gestion du moteur du véhicule et au système de gestion du système hydraulique.

Dans la partie médiane de la figure, on trouve le système de contrôle dynamique de trajectoire ESP. Ce système ESP comporte:

- un comparateur qui reçoit les différentes informations relevées par les capteurs du véhicule et qui calcule à chaque instant les différents efforts qui s'exercent sur le véhicule,
- un circuit de calcul des valeurs de consigne de la vitesse de lacet et de l'angle de dérive en fonction des ordres fournis par le conducteur (accélération, angle de braquage au volant, etc.),
- un circuit régulateur qui calcule le moment de lacet admissible à partir des informations fournies par le comparateur et à partir des valeurs de consigne calculées,
- enfin un circuit qui calcule les valeurs de consigne du couple de blocage des freins et du glissement des pneumatiques et qui fournit des ordres appropriés au système d'antiblocage des roues, au système d'antipatinage et au système de régulation du couple d'inertie du moteur.

Dans l'observation du comportement du véhicule, l'un des éléments essentiel est l'information fournie à chaque instant par le capteur de lacet.

Lorsque le capteur de lacet fournit une vitesse de lacet supérieure à une valeur déterminée (Seuil ESP), le système de contrôle dynamique de trajectoire doit intervenir pour redresser la trajectoire du véhicule. L'un des moyens dont dispose l'ESP est de freiner une ou plusieurs roues du véhicule comme cela est connu dans la technique.

Cependant, le problème est de donner au système, un seuil de fonctionnement qui ne donne pas lieu un déclenchement intempestif du système ESP. Notamment, il convient d'avoir un seuil de déclenchement qui ne fournisse pas un déclenchement de la régulation dans une situation où le véhicule n'est pas encore dans une situation critique notamment en ce qui concerne sa vitesse de lacets.

Selon l'invention, on prévoit une méthode applicable à un véhicule équipé d'un système de contrôle dynamique de trajectoire ESP qui a été réglé à des valeurs de seuils de déclenchement nominales déterminées pour différentes vitesses. Ces différentes valeurs de seuils nominales sont connues ou sont mesurables.

Selon l'invention, on soumet le véhicule à des essais de roulage, de préférence sur routes normales, dans des conditions normales d'utilisation, et cela sur un trajet de quelques dizaines de kilomètres.

Au cours de cet essai de roulage, on effectue, à chaque instant la mesure:

- des angles de consigne de lacet LC fournis par la commande du volant de direction,
- des angles de lacets mesurés LM sur le véhicule à l'aide des capteurs de lacet,
- des valeurs de seuils de déclenchement St du système ESP qui est toujours réglé aux valeurs de seuils nominales.

A partir de ces valeurs on effectue, pour chaque instant, le rapport de la différence des angles de consigne de lacet et des angles de lacets mesurés (dCM = LM - LC) par rapport aux valeurs de seuils:

$$\texttt{Cesp = (LM - LC)/St}$$

On obtient ainsi une série de valeurs de consommation de seuils Cesp. Ces consommations sont exprimées en pourcentages. Les valeurs de seuils de déclenchement du système ESP (valeurs de seuils nominales) sont alors modifiées en proportion de la consommation de seuil ESP. Si la consommation est élevée, on augmente la valeur de seuil nominale. Si la consommation est faible on diminue la valeur de seuil ou on l'augmente moins que dans le cas précédent.

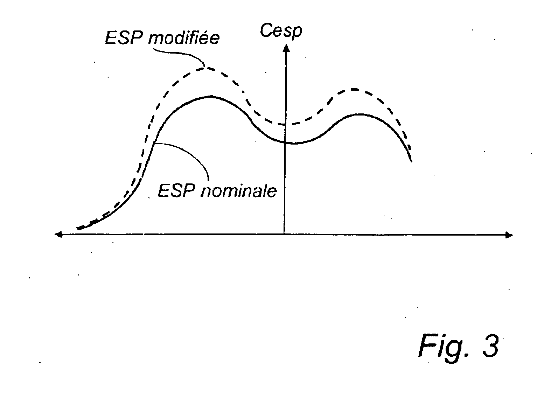

Par exemple, sur la figure 3 on trouve une courbe de consommation nominale de seuil ESP (en trait continu sur la figure 3). Après traitement selon le procédé de l'invention et modification des seuils de déclenchement de l'ESP, on obtient une courbe de consommation ESP représentée en pointillés.

La présente invention s'applique principalement à la mise au point de la suspension d'un véhicule automobile (les pneumatiques du véhicule, la suspension elle-même, la géométrie de la suspension) ainsi qu'à la mise au point du système ESP du véhicule.

## Revendications

1. Procédé de réglage d'un système de contrôle dynamique de trajectoire pour véhicule automobile, **caractérisé en ce qu'**il comporte les étapes suivantes:

   • étape a: équipement d'un véhicule avec un système ESP possédant des valeurs seuils nominales (Sv), de déclenchement du système ESP, à différentes vitesses connues,
   • étape b: acquisition en temps réel sur ledit véhicule en situation de roulage, à différents instantes, des angles de consignes de lacets (LC),
   • étape c: acquisition en temps réel en situation de roulage, aux mêmes instants, des angles de lacets mesurés du véhicule (LM),
   • étape d: mesure du seuil de déclenchement (St) de l'ESP à ces différents instants,
   • étape e: établissement de la courbe des valeurs de consommations (Cesp) en fonction du temps, ladite courbe étant représentative des différences (dCM) des angles de lacets mesurés et de consignes de lacets (dCM = LM-LC) rapportées aux valeurs de seuil de déclenchement (St) mesurées,
   • étape f: modification des valeurs de seuils nominales (Sv) d'un pourcentage qui est proportionnel aux valeurs de consommation (Cesp).

2. Procédé de sélection des caractéristiques pneumatiques d'un véhicule **caractérisé en ce qu'**il comporte les étapes suivantes:

   • étape a: équipement d'un véhicule avec un système ESP possédant des valeurs seuils nominales (Sv) de déclenchement du système ESP à différentes vitesses connues,
   • étape b: acquisition en temps réel sur ledit véhicule en situation de roulage, à différents instants, des angles de consignes de lacets (LC),
   • étape c: acquisition en temps réel en situation de roulage, aux mêmes instants, des angles de lacets mesurés du véhicule (LM),
   • étape d: mesure du seuil de déclenchement (St) de l'ESP à ces différents instants,
   • étape e: établissement de la courbe des valeurs de consommations (Cesp) en fonction du temps, ladite courbe étant représentative des différences (dCM) des angles de lacets mesurés et de consignes de lacets (dCM = LM-• LC) rapportées aux valeurs de seuil de déclenchement (St) mesurées,
   • étape f: modification des valeurs de seuils nominales (Sv) d'un pourcentage qui est proportionnel aux valeurs de consommation (Cesp).

3. Procédé de réglage de la suspension d'un véhicule **caractérisé en ce qu'**il comporte les étapes suivantes:

   • étape a: équipement d'un véhicule avec un système ESP possédant des valeurs seuils nominales (Sv) de déclenchement du système ESP à différentes vitesses connues,
   • étape b: acquisition en temps réel sur ledit véhicule en situation de roulage, à différents instants, des angles de consignes de lacets (LC),
   • étape c: acquisition en temps réel en situation de roulage, aux mêmes instants, des angles de lacets mesurés du véhicule (LM),
   • étape d: mesure du seuil de déclenchement (St) de l'ESP à ces différents instants,
   • étape e: établissement de la courbe des valeurs de consommations (Cesp) en fonction du temps, ladite courbe étant représentative des différences (dCM) des angles de lacets mesurés et de consignes de lacets (dCM = LM-LC) rapportées aux valeurs de seuil de déclenchement (St) mesurées,
   • étape f: modification des valeurs de seuils nominales (Sv) d'un pourcentage qui est proportionnel aux valeurs de consommation (Cesp).

4. Procédé selon la revendication 1, **caractérisé en ce que** ledit procédé est un procédé de réglage dynamique et de mise au point du système de contrôle dynamique de trajectoire (ESP) d'un véhicule.

## Claims

1. Method of adjusting an electronic stability program for a motor vehicle, **characterized in that** it comprises the following steps:

• step a: equipping a vehicle with an ESP system having nominal threshold values (Sv) for triggering the ESP system at different known speeds,
• step b: acquiring in real time, on said vehicle in a rolling situation, at various moments, setpoint yaw angles (LC),
• step c: acquiring in real time, in a rolling situation, at the same moments, the yaw angles measured on the vehicle (LM),
• step d: measuring the ESP triggering threshold (St) at these various moments,
• step e: establishing the curve of the consumption values (Cesp) as a function of time, said curve being representative of the differences (dCM) of the measured yaw angles and the setpoint yaw angles (dCM = LM-LC) versus the measured triggering threshold values (St),
• step f: modifying the nominal threshold values (Sv) by a percentage that is proportional to the consumption values (Cesp).

2. Method of selecting the tire characteristics of a vehicle, **characterized in that** it comprises the following steps:

   • step a: equipping a vehicle with an ESP system having nominal threshold values (Sv) for triggering the ESP system at different known speeds,
   • step b: acquiring in real time, on said vehicle in a rolling situation, at various moments, setpoint yaw angles (LC),
   • step c: acquiring in real time, in a rolling situation, at the same moments, the yaw angles measured on the vehicle (LM),
   • step d: measuring the ESP triggering threshold (St) at these various moments,
   • step e: establishing the curve of the consumption values (Cesp) as a function of time, said curve being representative of the differences (dCM) of the measured yaw angles and setpoint yaw angles (dCM = LM-LC) versus the measured triggering threshold values (St),
   • step f: modifying the nominal threshold values (Sv) by a percentage that is proportional to the consumption values (Cesp).

3. Method of adjusting the suspension of a vehicle, **characterized in that** it comprises the following steps:

   • step a: equipping a vehicle with an ESP system having nominal threshold values (Sv) for triggering the ESP system at different known speeds,
   • step b: acquiring in real time, on said vehicle in a rolling situation, at various moments, setpoint yaw angles (LC),
   • step c: acquiring in real time, in a rolling situation, at the same moments, the yaw angles measured on the vehicle (LM),
• step d: measuring the ESP triggering threshold (St) at these various moments,
• step e: establishing the curve of the consumption values (Cesp) as a function of time, said curve being representative of the differences (dCM) of the measured yaw angles and setpoint yaw angles (dCM = LM-LC) versus the measured triggering threshold values (St),
• step f: modifying the nominal threshold values (Sv) by a percentage that is proportional to the consumption values (Cesp).

4. Method according to Claim 1, **characterized in that** said method is a method of dynamically adjusting and debugging the electronic stability program (ESP) of a vehicle.

**Patentansprüche**

1. Verfahren zum Einstellen eines Systems zur dynamischen Spurkontrolle für ein Kraftfahrzeug, **dadurch gekennzeichnet, dass** es die folgenden Schritte umfasst:

   • Schritt a: Ausstatten eines Fahrzeugs mit einem ESP-System, das nominale Schwellenwerte (Sv) zum Auslösen des ESP-Systems bei unterschiedlichen bekannten Geschwindigkeiten enthält,
   • Schritt b: Erfassen der Sollgierwinkel (LC) in Ist-Zeit am Fahrzeug in einer Fahrsituation und zu unterschiedlichen Zeitpunkten,
   • Schritt c: Erfassen der gemessenen Gierwinkel (LM) des Fahrzeugs in Ist-Zeit in einer Fahrsituation und zu den gleichen Zeitpunkten,
   • Schritt d: Messen des Schwellenwerts zum Auslösen (St) des ESP zu diesen unterschiedlichen Zeitpunkten,
   • Schritt e: Bilden der Kurve der Verbrauchswerte (Cesp) in Abhängigkeit von der Zeit, wobei die Kurve die Unterschiede (dCM) zwischen den gemessenen Gierwinkeln und den Sollgierwinkeln (dCM = LM - LC) bezogen auf die gemessenen Schwellenwerte zum Auslösen (St) angibt,
   • Schritt f: Ändern der nominalen Schwellenwerte (Sv) um einen Prozentanteil, der proportional zu den Verbrauchswerten (Cesp) ist.

2. Verfahren zum Auswählen pneumatischer Merkmale eines Fahrzeugs, **dadurch gekennzeichnet, dass** es die folgenden Schritte umfasst:

   • Schritt a: Ausstatten eines Fahrzeugs mit einem ESP-System, das nominale Schwellenwerte (Sv) zum Auslösen des ESP-Systems bei unterschiedlichen bekannten Geschwindigkeiten enthält,

• Schritt b: Erfassen der Sollgierwinkel (LC) in Ist-Zeit am Fahrzeug in einer Fahrsituation und zu unterschiedlichen Zeitpunkten,

• Schritt c: Erfassen der gemessenen Gierwinkel (LM) des Fahrzeugs in Ist-Zeit in einer Fahrsituation und zu den gleichen Zeitpunkten,

• Schritt d: Messen des Schwellenwerts zum Auslösen (St) des ESP zu diesen unterschiedlichen Zeitpunkten,

• Schritt e: Bilden der Kurve der Verbrauchswerte (Cesp) in Abhängigkeit von der Zeit, wobei die Kurve die Unterschiede (dCM) zwischen den gemessenen Gierwinkeln und den Sollgierwinkeln (dCM = LM - LC) bezogen auf die gemessenen Schwellenwerte zum Auslösen (St) angibt,

• Schritt f: Ändern der nominalen Schwellenwerte (Sv) um einen Prozentanteil, der proportional zu den Verbrauchswerten (Cesp) ist.

3. Verfahren zum Einstellen der Aufhängung eines Fahrzeugs, **dadurch gekennzeichnet, dass** es die folgenden Schritte umfasst:

• Schritt a: Ausstatten eines Fahrzeugs mit einem ESP-System, das nominale Schwellenwerte (Sv) zum Auslösen des ESP-Systems bei unterschiedlichen bekannten Geschwindigkeiten enthält,

• Schritt b: Erfassen der Sollgierwinkel (LC) in Ist-Zeit am Fahrzeug in einer Fahrsituation und zu unterschiedlichen Zeitpunkten,

• Schritt c: Erfassen der gemessenen Gierwinkel (LM) des Fahrzeugs in Ist-Zeit in einer Fahrsituation und zu den gleichen Zeitpunkten,

• Schritt d: Messen des Schwellenwerts zum Auslösen (St) des ESP zu diesen unterschiedlichen Zeitpunkten,

• Schritt e: Bilden der Kurve der Verbrauchswerte (Cesp) in Abhängigkeit von der Zeit, wobei die Kurve die Unterschiede (dCM) zwischen den gemessenen Gierwinkeln und den Sollgierwinkeln (dCM = LM - LC) bezogen auf die gemessenen Schwellenwerte zum Auslösen (St) angibt,

• Schritt f: Ändern der nominalen Schwellenwerte (Sv) um einen Prozentanteil, der proportional zu den Verbrauchswerten (Cesp) ist.

4. Verfahren nach Anspruch 1, **dadurch gekennzeichnet, dass** das Verfahren ein dynamisches Einstellverfahren und ein Verfahren zur Abstimmung des Systems zur dynamischen Sprukontrolle (ESP) eines Fahrzeugs ist.

Fig. 1

ORGANES COMMANDES

PARAMETRES:

Vitesses des roues

Angle de volant

Vitesse de lacet

Pression de freinage

Etc.

VEHICULE

GESTION DU MOTEUR DU VEHICULE

GESTION DU SYSTEME HYDRAULIQUE

ESP

COMPARATEUR

VALEURS DE GONSIGNE
DE LA VITESSE DE LACET
ET DE L'ANGLE DE DERIVE

REGULATEUR D'ETAT POUR LE
MOMENT DE LACET

VALEURS DE CONSIGNE
DU COUPLE DE BLOCAGE DU FREIN
ET DU GLISSEMENT DES PNEUS

ABS
ASR
MSR

*Fig. 2*

Fig. 3

**EP 1 854 689 B1**

## RÉFÉRENCES CITÉES DANS LA DESCRIPTION

**Documents brevets cités dans la description**

- WO 02058976 A
- FR 2858951